# EUROPEAN PATENT SPECIFICATION

(11) **EP 2 756 439 B1**
(45) Date of publication and mention of the grant of the patent: **14.11.2018**
(21) Application number: 12831899.5
(22) Date of filing: 14.09.2012
(51) Int. Cl.: G06F 21/00, G06F 15/16, H04L 29/06

(54) **SYSTEM AND METHOD FOR REAL-TIME CUSTOMIZED THREAT PROTECTION**
SYSTEM UND VERFAHREN FÜR PERSONALISIERTEN ECHTZEITSCHUTZ VOR BEDROHUNGEN
SYSTÈMES ET PROCÉDÉS POUR UNE PROTECTION PERSONNALISÉE EN TEMPS RÉEL CONTRE DES MENACES

(30) Priority: 15.09.2011 US 201113233497
(43) Date of publication of application: 23.07.2014
(60) Divisional application: 15198066.1
(73) Proprietor: McAfee, LLC, Santa Clara, CA 95054 (US)
(72) Inventor: BU, Zheng, Freemont, California 94539 (US); KASHYAP, Rahul Chander, Foster City, California 94404 (US); LIN, Yichong, Freemont, California 94538 (US); MA, Denys Lok Hang, Mountain View, California 94043 (US)
(74) Representative: Goddar, Heinz J.
(86) International application number: PCT/US2012/055630
(87) International publication number: WO 2013/040496

(56) References cited:
- EP-A1- 2 348 448
- KR-A- 20080 065 338
- US-A1- 2006 026 688
- US-A1- 2010 317 324
- US-B1- 7 861 299
- US-B1- 7 861 299
- US-B2- 7 644 365
- US-B2- 7 644 365

## Description

### TECHNICAL FIELD

This specification relates in general to the field of network security, and more particularly, to a system and method for real-time customized threat protection.

### BACKGROUND

Information systems have become integrated into the daily lives of people and businesses on a global scale, and the field of information security has likewise become increasingly important in today's society. Such wide scaled integration has also presented many opportunities for malicious operators to exploit these systems. If malicious software can infect a host computer, it can perform any number of malicious actions, such as sending out spam or malicious emails from the host computer, stealing sensitive information from a business or individual associated with the host computer, propagating to other host computers, and/or assisting with distributed denial of service attacks. In addition, for some types of malware, a malicious operator can sell or otherwise give access to other malicious operators, thereby escalating the exploitation of the host computers. Thus, the ability to effectively protect and maintain stable computers and systems continues to present significant challenges for component manufacturers, system designers, and network operators.

EP 2 348 448 A1 discloses an approach for managing security events on a mobile computing device. A security event manager is established on the mobile computing device. The security event manager receives security event data from a plurality of security event sources of the mobile computing device and correlates the security event data based on a security policy to determine whether a security event has occurred. The security event manager further responds to the security event.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified block diagram illustrating an example embodiment of a network environment for real-time customized threat protection in accordance with this specification; and
FIGURE 2 is a simplified interaction diagram of potential operations that may be associated with the network environment.
FIGURE 3 is simplified flow diagram of potential operations that may be associated with the network environment.

### DETAILED DESCRIPTION OF EXAMPLE EMBODIMENTS

### OVERVIEW

A method is provided in one example embodiment that includes receiving event information associated with reports from sensors distributed throughout a network environment and correlating the event information to identify a threat. A customized security policy based on the threat may be sent to the sensors. In more particular embodiments, the event information may be received from a threat intelligence cloud. In yet other embodiments, reputation data may also be sent to the threat intelligence cloud based on the threat.

### EXAMPLE EMBODIMENTS

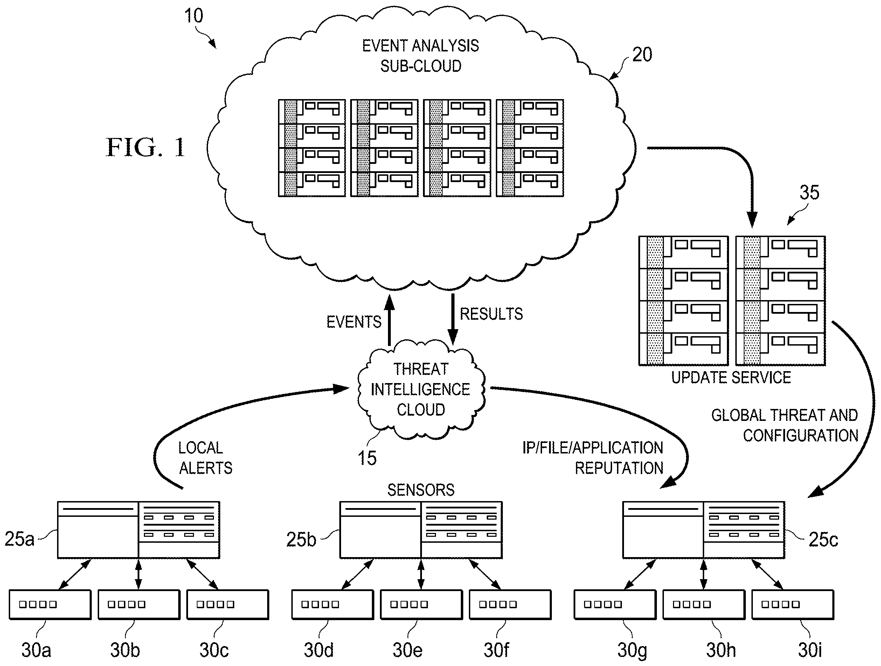

Turning to FIGURE 1, FIGURE 1 is a simplified block diagram of an example embodiment of a network environment 10 in which a system and method for real-time customized threat protection may be implemented. Network environment 10 includes a threat intelligence cloud 15, an event analysis sub-cloud 20, sensors 25a-25c, and hosts 30a-30i. Sensors 25a-25c may include, for example, intrusion prevention systems, gateway appliances, firewalls, antivirus software, and/or other security systems distributed throughout network environment 10 to gather information from hosts 30a-30i across threat vectors, including file, web, message, and network threat vectors. Threat intelligence cloud 15 generally represents an infrastructure for receiving information from sensors 25a-25c and delivering real-time reputation-based threat intelligence derived from that information. Event analysis sub-cloud represents an infrastructure for analyzing information received by threat intelligence cloud 15, and may also provide an update service 35 that can deliver threat information and policy configuration updates to sensors 25a-25c and/or hosts 30a-30i.

Each of the elements of FIGURE 1 may couple to one another through simple network interfaces or through any other suitable connection (wired or wireless), which provides a viable pathway for network communications. Additionally, any one or more of these elements may be combined or removed from the architecture based on particular configuration needs. Network environment 10 may include a configuration capable of transmission control protocol/Internet protocol (TCP/IP) communications for the transmission or reception of packets in a network. Network environment 10 may also operate in conjunction with a user datagram protocol/IP (UDP/IP) or any other suitable protocol where appropriate and based on particular needs.

Before detailing the operations and the infrastructure of FIGURE 1, certain contextual information is provided to offer an overview of some operations that may be occurring within network environment 10. Such information is offered earnestly and for teaching purposes only and, therefore, should not be construed in any way to limit the broad applications for the present disclosure.

A typical network environment includes the ability to communicate electronically with other networks, using the Internet, for example, to access web pages hosted on servers connected to the Internet, to send or receive electronic mail (i.e., email) messages, or to exchange files with end users or servers connected to the Internet. Users normally expect data stored in a network environment to be readily available but secure from unauthorized access. They also usually expect communications to be reliable and secure from unauthorized access. However, malicious users are continuously developing new tactics for interfering with normal operations and gaining access to confidential information. Viruses, Trojans, worms, bots, and other malware are common examples of vehicles used to exploit vulnerabilities in a network or system, but any activity designed to interfere with the normal operation of a computer or network through unauthorized access, destruction, disclosure, modification of data, and/or denial of service is a "threat."

A broad range of countermeasures can be deployed against threats, including firewalls, intrusion prevention systems, network access controls, and web filtering. An intrusion prevention system (IPS), also known as an intrusion detection and prevention system (IDPS), for example, can monitor network and/or system activities for malicious or potentially malicious activity and send an alert. IPS alerts, however, may not always be actionable. Many alerts provide only cautionary information or guidance, even if an observed event is indicative of malicious activity, since a single event may not be sufficient to identify an attack with a suitable degree of confidence.

An IPS is typically placed in-line so that it can actively block detected intrusions, such as by dropping packets, resetting a connection, and/or blocking traffic from a source. An IPS can use multiple detection methods, including application and protocol anomaly, shell-code detection algorithms, and signatures. For example, signature-based detection generally includes comparing a signature (i.e., any pattern that corresponds to a known threat) against observed events or activity to identify a threat. An example signature is an attempt to establish a remote connection as a root user. Another example is receiving an email with a subject line and attached file that are characteristic of a known form of malware.

Signature-based detection can be very effective at detecting a known threat, but can be ineffective at detecting an unknown threat, or even slight variations of a known threat. Moreover, IPS signatures tend to be universal and not generally customized for a local environment. Threats may only be seen locally, without a global view. Knowledge collected from sensors deployed globally cannot generally be leveraged to improve local security policy. Manual adjustment to policies is also often required, which may cause enough delay to allow an infection to spread.

In accordance with embodiments described herein, network environment 10 can overcome these shortcomings (and others) by providing a system and method for correlating global threat intelligence and local threat intelligence, and providing a customized security policy.

Referring again to FIGURE 1 for illustration, hosts 30a-30i may be network elements, which are meant to encompass network appliances, servers, routers, switches, gateways, bridges, load-balancers, firewalls, processors, modules, or any other suitable device, component, element, or object operable to exchange information in a network environment. Network elements may include any suitable hardware, software, components, modules, interfaces, or objects that facilitate the operations thereof. This may be inclusive of appropriate algorithms and communication protocols that allow for the effective exchange of data or information. Hosts 30a-30i may also be representative of other wired or wireless network nodes, such as desktop computers, laptops, or mobile communication devices (e.g., an iPhone, iPad, Android device, etc.).

Threat intelligence cloud 15 is a reputation system in one embodiment, which may be implemented as a distributed filesystem cluster. In general, a reputation system monitors activity and assigns a reputation value or score to an entity based on its past behavior. The reputation value may denote different levels of trustworthiness on the spectrum from benign to malicious. For example, a connection reputation value (e.g., minimal risk, unverified, high risk, etc.) may be computed for a network address based on connections made with the address or email originating from the address. Connection reputation systems may be used to reject email or network connections with IP addresses known or likely to be associated with malicious activity, while file reputation systems can block activity of files (e.g., applications) having hashes known or likely to be associated with malicious activity. Threat intelligence cloud 15 may receive reports from sensors (e.g., sensors 25a-25c) distributed throughout a network, some of which may be in separate domains controlled by separate entities. A collection module may request sensors to periodically send reports to threat intelligence cloud 15, for example, which may be sent anonymously to protect sensitive information. Reports may include event information, such as the source and destination address of a connection, the type of activity, downloaded files, protocols used, etc., and may be actionable (e.g., alerts of varying degrees of severity) or advisory (e.g., providing information about suspicious activity that may not be actionable on its own).

Event analysis sub-cloud 20 represents a cloud infrastructure for storing, processing, and mining events, both historically and in near real-time. Sub-cloud 20 may implement heuristics for data-mining alerts to correlate information from sensors distributed throughout a network (e.g., sensors 25a-25c) and identify new threats. Long-term and short-term profiling algorithms may be run to identify prevalent threats detected by sensors globally and automate responses. Thus, sub-cloud 20 may collect real-time alert information and provide advanced analysis and threat correlation that can be customized per sensor, which can facilitate rapid global threat detection. Live threat information can be sent back to sensors as threats occur. Sub-cloud 20 may retrieve events from threat intelligence cloud 15 (which may receive them as alerts from sensors 25a-25c), or may receive them directly from sensors 25a-25c, and return results that allow threat intelligence cloud to adjust reputation data associated with new threats. Moreover, sub-cloud 20 may also provide updates and new threat intelligence automatically to sensors 25a-25c and/or hosts 30a-30i remotely and in near real-time. Customers may then quickly and proactively act on these updates, protecting their systems by leveraging the processing power and heuristics of sub-cloud 20, as well as global threat intelligence. Sub-cloud 20 can also enable policy configuration suggestions, automatically adjust a policy or signature set configurations, and/or enable other response actions so that new global threats can be identified or blocked with a higher degree of confidence (and without manual configuration).

In certain embodiments, threat intelligence cloud 15 and event analysis sub-cloud 20 may both be implemented as cloud infrastructures. A cloud infrastructure in general is an environment for enabling on-demand network access to a shared pool of computing resources that can be rapidly provisioned (and released) with minimal service provider interaction. Thus, it can provide computation, software, data access, and storage services that do not require end-user knowledge of the physical location and configuration of the system that delivers the services. A cloud-computing infrastructure can include services delivered through shared data-centers, which may appear as a single point of access. Multiple cloud components, such as cloud 15 and sub-cloud 20, can communicate with each other over loose coupling mechanisms, such as a messaging queue. Thus, the processing (and the related data) need not be in a specified, known, or static location. Cloud 15 and sub-cloud 20 may encompass any managed, hosted service that can extend existing capabilities in real time.

In regards to the internal structure associated with network environment 10, each of threat intelligence cloud 15, event analysis sub-cloud 20, sensors 25a-25c, and hosts 30a-30i can include memory elements for storing information to be used in the operations outlined herein. These devices may further keep information in any suitable memory element (e.g., random access memory (RAM), read-only memory (ROM), erasable programmable ROM (EPROM), electrically erasable programmable ROM (EEPROM), application specific integrated circuit (ASIC), etc.), software, hardware, or in any other suitable component, device, element, or object where appropriate and based on particular needs. Any of the memory items discussed herein should be construed as being encompassed within the broad term "memory element." The information being tracked or sent by threat intelligence cloud 15, event analysis sub-cloud 20, sensors 25a-25c, or hosts 30a-30i could be provided in any database, register, table, queue, control list, or storage structure, all of which can be referenced at any suitable timeframe. Any such storage options may also be included within the broad term "memory element," as used herein.

Additionally, threat intelligence cloud 15, event analysis sub-cloud 20, sensors 25a-25c, and hosts 30a-30i may include a number of processors that can execute software or an algorithm to perform activities as discussed herein. A processor can execute any type of instructions associated with memory elements to achieve the operations detailed herein. In one example, the processors could transform an element or an article (e.g., data) from one state or thing to another state or thing.

Note that in certain example implementations, the functions outlined herein may be implemented by logic encoded in one or more tangible media (e.g., embedded logic provided in an ASIC, digital signal processor (DSP) instructions, software (potentially inclusive of object code and source code) to be executed by a processor, or other similar machine, etc.), which may be inclusive of non-transitory media. In some of these instances, memory elements can store data used for the operations described herein. This includes the memory elements being able to store software, logic, code, or processor instructions that are executed to carry out the activities described herein. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an EPROM, an EEPROM) or an ASIC that includes digital logic, software, code, electronic instructions, or any suitable combination thereof. Any of the potential processing elements, modules, and machines described herein should be construed as being encompassed within the broad term "processor."

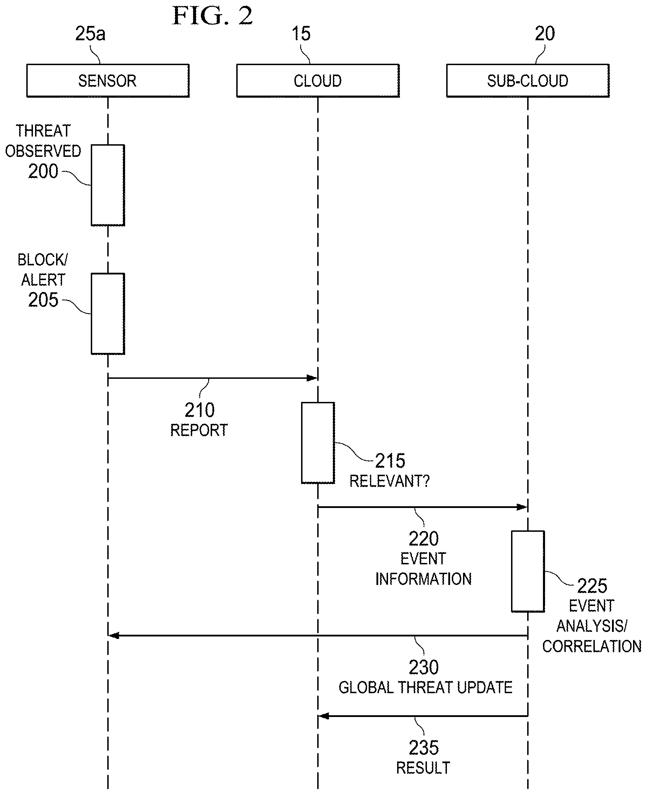

FIGURE 2 is a simplified interaction diagram of potential operations that may be associated with example embodiments of network environment 10 in which sub-cloud 20 is dedicated to analyzing events from IPS sensors. At 200, an IPS sensor (e.g., sensor 25a) may observe activity indicative of a threat, such as host 30b downloading a PDF document with an embedded JAVASCRIPT tag. At 205, the local IPS may block the threat and/or send a local alert. At 210, the event may also be reported to threat intelligence cloud 15. At 215, threat intelligence cloud 15 may determine if the event is relevant to event analysis in sub-cloud 20 (e.g., the report is received from an IPS). If the event is relevant to analysis in sub-cloud 20, threat intelligence cloud 15 may send the event information to sub-cloud 20 at 220. Using various analysis heuristics (e.g., based on time, geolocation, reputation, etc.) at 225, sub-cloud 20 may correlate the event with events reported from other sensors distributed throughout network environment 10 (or subsequent events from the same sensor, such as an unexpected increase in out-of-band traffic) to identify global threats.

For example, a low-severity alert may be set for downloading a portable document format (PDF) file having JAVASCRIPT tags. A local policy may ignore such an event since it is a low-severity alert. However, the reputation and source of such a PDF may be determined based on reports received from multiple sensors throughout the network. By data mining events reported from the distributed sensors, the PDF document may be identified as a threat targeting a particular country, region, or industry by correlating events reported by sensors in that country, region, or industry. A host that downloaded this PDF file from a suspicious address with a bad reputation can also be identified. Suggestions, guidance, and policy change recommendations can then be provided.

At 230, sub-cloud 20 may generate global threat information and inform all IPSs in network environment 10 or within a particular segment (e.g., associated with a particular country) of network environment 10, as well as provide customized security policy/configuration suggestions to them based on threat correlation. Customized security policies can include granular response actions to protect network environment 10 without intervention from an administrator. For example, update service 35 may provide a custom security policy to sensor 25a that identifies an infected host (e.g., host 30b) by address, identifies the type of data loss (if any), and quarantines the infected host, or it may identify a particular address that should be blocked. At 235, sub-cloud 20 may also provide results to threat intelligence cloud 15 to augment other reputation data.

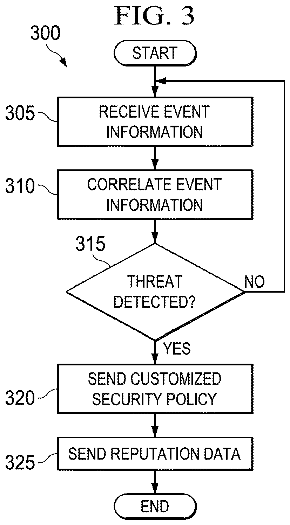

FIGURE 3 is a simplified flowchart 300 illustrating potential operations that may be associated with certain embodiments of network environment 10. In particular embodiments, such operations may be executed by event analysis sub-cloud 20, for example. At 305, event information may be received. Event information may, for example, be pushed or pulled from threat intelligence cloud 15. In some embodiments, the event information may be reported by sensors distributed through a network environment (e.g., network environment 10). The event information may be correlated at 310. If correlation reveals a threat at 315, a customized security policy may be sent to at least one of the sensors at 320. The customized security policy can be based in part or in whole on the threat identified at 315. Reputation data (which may also be based in part or in whole on the threat detected at 315) may be sent at 320. For example, correlation of event information may identify a threat associated with a particular network address and sub-cloud 20 may send an update of the network address's reputation to threat intelligence cloud 15.

Thus, network environment 10 may provide significant advantages, some of which have already been described. More particularly, local security countermeasures can use locally tuned policy to provide protection against threats based on the local network's needs, and network environment 10 can connect each of the local sensors (i.e., sensors 25a-25c) into one global threat intelligence network. In network environment 10, local security countermeasures are no longer merely reactive to the latest threat. Intelligence about new threats may be pushed automatically to management systems, allowing them to proactively protect a network. Moreover, network environment 10 may significantly reduce total cost of ownership for security countermeasures by leveraging a cloud-based infrastructure for proactive tuning.

Note that with the examples provided above, interaction may be described in terms of two, three, or four network elements. However, this has been done for purposes of clarity and example only. In certain cases, it may be easier to describe one or more of the functionalities of a given set of flows by only referencing a limited number of network elements. It should be appreciated that network environment 10 (and its teachings) are readily scalable and can accommodate a large number of components, as well as more complicated/sophisticated arrangements and configurations. It should also be appreciated that the principles described herein in the particular context of an IPS may be readily extended to other types of network elements, such as gateways, firewalls, etc., or to host systems, such as an antivirus system. Accordingly, the examples provided should not limit the scope or inhibit the broad teachings of network environment 10 as potentially applied to a myriad of other architectures. Additionally, although described with reference to particular scenarios, where operations may be associated with a given network element, these operations can be implemented externally, or consolidated and/or combined in any suitable fashion. In certain instances, certain elements may be provided in a single proprietary module, device, unit, etc.

It is also important to note that the steps in the appended diagrams illustrate only some of the possible signaling scenarios and patterns that may be executed by, or within, network environment 10. Some of these steps may be deleted or removed where appropriate, or these steps may be modified or changed considerably without departing from the scope of teachings provided herein. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by network environment 10 in that any suitable arrangements, chronologies, configurations, and timing mechanisms may be provided without departing from the teachings provided herein.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

## Claims

1. A method, comprising:
receiving (305), by an event analysis sub-cloud of a network environment, event information associated with reports from sensors distributed throughout the network environment, wherein the event information is received from a threat intelligence cloud of the network environment;
correlating (310), by the event analysis sub-cloud, the event information to identify a threat; and
sending (320), by the event analysis sub-cloud, a customized security policy to at least one of the sensors based on the threat.

2. The method of Claim 1, further comprising sending (325) reputation data to a reputation system based on the threat.

3. The method of Claim 1, further comprising sending (325) reputation data to the threat intelligence cloud based on the threat.

4. The method of any of Claims 1-3, wherein the sensors comprise intrusion prevention systems.

5. The method of any of Claims 1-4, wherein the customized security policy quarantines a host infected with the threat.

6. The method of any of Claims 1-5, wherein the correlating (310) the event information includes correlating at least some event information from a particular sensor with subsequent event information received from the particular sensor.

7. The method of any of Claims 1-5, wherein the correlating (310) the event information includes correlating at least some event information from a particular sensor with other event information received from other sensors of the sensors distributed throughout the network environment.

8. The method of any of Claims 1-7, further comprising identifying one of a country, a region, or an industry target by the threat.

9. An apparatus, comprising means to perform a method as claimed in any preceding Claim.

10. The apparatus of Claim 9, wherein the means for performing a method comprise at least one processor and at least one memory element.

11. The apparatus of Claim 10, wherein the at least one memory element comprises machine-readable instructions, that when executed cause the apparatus to perform the method of any of Claims 1-7.

12. The apparatus of any of Claims 9-11, wherein the apparatus is a shared pool of computing resources.

13. One or more machine readable media that include core for execution, and when executed, implement a method or realize an apparatus as claimed in any preceding Claim.

## Patentansprüche

1. Verfahren, das folgende Schritte umfasst:
Empfangen (305), von einer Ereignisanalyse-Teil-Cloud einer Netzwerkumgebung, von Ereignisinformationen, die Berichten von Sensoren zugeordnet sind, die in der gesamten Netzwerkumgebung verteilt sind, wobei die Ereignisinformationen von einer Informations-Cloud für Bedrohungen (threat intelligence cloud) der Netzwerkumgebung empfangen werden;
Korrelieren (310), von der Ereignisanalyse-Teil-Cloud, der Ereignisinformationen, um eine Bedrohung zu identifizieren; und
Senden (320), von der Ereignisanalyse-Teil-Cloud, einer angepassten Sicherheitsrichtlinie an mindestens einen der Sensoren basierend auf der Bedrohung.

2. Verfahren nach Anspruch 1, das ferner ein Senden (325) von Reputationsdaten an ein Reputationssystem basierend auf der Bedrohung umfasst.

3. Verfahren nach Anspruch 1, das ferner ein Senden (325) von Reputationsdaten an die Informations-Cloud für Bedrohungen basierend auf der Bedrohung umfasst.

4. Verfahren nach einem der Ansprüche 1-3, wobei die Sensoren Einbruchschutzsysteme umfassen.

5. Verfahren nach einem der Ansprüche 1-4, wobei die angepasste Sicherheitsrichtlinie einen mit der Bedrohung infizierten Host unter Quarantäne stellt.

6. Verfahren nach einem der Ansprüche 1-5, wobei das Korrelieren (310) der Ereignisinformationen ein Korrelieren von mindestens einigen Ereignisinformationen von einem bestimmten Sensor mit nachfolgenden Ereignisinformationen, die von dem bestimmten Sensor empfangenen werden, aufweist.

7. Verfahren nach einem der Ansprüche 1-5, wobei das Korrelieren (310) der Ereignisinformationen ein Korrelieren von mindestens einigen Ereignisinformationen von einem bestimmten Sensor mit anderen Ereignisinformationen, die von anderen Sensoren der in der gesamten Netzwerkumgebung verteilten Sensoren empfangen werden, aufweist.

8. Verfahren nach einem der Ansprüche 1-7, das ferner ein Identifizieren eines aus einem Land, einer Regionen oder einem Branchenziel der Bedrohung umfasst.

9. Vorrichtung, die Mittel zum Ausführen eines Verfahrens umfasst, wie es in einem der vorhergehenden Ansprüche beansprucht ist.

10. Vorrichtung nach Anspruch 9, wobei die Mittel zum Ausführen eines Verfahrens mindestens einen Prozessor und mindestens ein Speicherelement umfassen.

11. Vorrichtung nach Anspruch 10, wobei das mindestens eine Speicherelement maschinenlesbare Befehle umfasst, die bei Ausführung die Vorrichtung veranlassen, das Verfahren nach einem der Ansprüche 1-7 durchzuführen.

12. Vorrichtung nach einem der Ansprüche 9-11, wobei die Vorrichtung ein gemeinsamer Pool von Rechenressourcen ist.

13. Ein oder mehrere maschinenlesbare Medien, die einen Kern zur Ausführung aufweisen und bei Ausführung ein Verfahren implementieren oder eine Vorrichtung realisieren, wie in einem der vorhergehenden Ansprüche beansprucht.

## Revendications

1. Procédé, comprenant les étapes ci-dessous consistant à :
recevoir (305), par le biais d'un sous-nuage d'analyse d'événements d'un environnement de réseau, des informations d'événements associées à des rapports provenant de capteurs répartis dans l'ensemble de l'environnement de réseau, dans lequel les informations d'événements sont reçues en provenance d'un nuage de renseignements sur les menaces de l'environnement de réseau ;
corréler (310), par le biais du sous-nuage d'analyse d'événements, les informations d'événements, en vue d'identifier une menace ; et
envoyer (320), par le biais du sous-nuage d'analyse d'événements, une politique de sécurité personnalisée, à au moins l'un des capteurs, sur la base de la menace.

2. Procédé selon la revendication 1, comprenant en outre l'étape consistant à envoyer (325) des données de réputation à un système de réputation, sur la base de la menace.

3. Procédé selon la revendication 1, comprenant en outre l'étape consistant à envoyer (325) des données de réputation au nuage de renseignements sur les menaces, sur la base de la menace.

4. Procédé selon l'une quelconque des revendications 1 à 3, dans lequel les capteurs comprennent des systèmes de prévention des intrusions.

5. Procédé selon l'une quelconque des revendications 1 à 4, dans lequel la politique de sécurité personnalisée met en quarantaine un hôte infecté par la menace.

6. Procédé selon l'une quelconque des revendications 1 à 5, dans lequel l'étape de corrélation (310) des informations d'événements consiste à corréler au moins certaines informations d'événements provenant d'un capteur spécifique, avec des informations d'événements subséquentes reçues en provenance du capteur spécifique.

7. Procédé selon l'une quelconque des revendications 1 à 5, dans lequel l'étape de corrélation (310) des informations d'événements consiste à corréler au moins certaines informations d'événements provenant d'un capteur spécifique, avec d'autres informations d'événements reçues en provenance d'autres capteurs parmi les capteurs répartis dans l'ensemble de l'environnement de réseau.

8. Procédé selon l'une quelconque des revendications 1 à 7, comprenant en outre l'étape consistant à identifier l'un des éléments parmi un pays, une région ou une cible industrielle de la menace.

9. Appareil, comprenant des moyens pour mettre en oeuvre un procédé selon l'une quelconque des revendications précédentes.

10. Appareil selon la revendication 9, dans lequel les moyens pour mettre en oeuvre un procédé comprennent au moins un processeur et au moins un élément de mémoire.

11. Appareil selon la revendication 10, dans lequel ledit au moins un élément de mémoire comprend des instructions lisibles par machine, qui, lorsqu'elles sont exécutées, amènent l'appareil à mettre en oeuvre le procédé selon l'une quelconque des revendications 1 à 7.

12. Appareil selon l'une quelconque des revendications 9 à 11, dans lequel l'appareil est un pool partagé de ressources informatiques.

13. Un ou plusieurs supports lisibles par machine qui incluent un coeur à des fins d'exécution, et qui, lorsqu'ils sont exécutés, mettent en oeuvre un procédé ou réalisent un appareil selon l'une quelconque des revendications précédentes.
